# EUROPEAN PATENT APPLICATION

(11) **EP 4 764 376 A1**
(43) Date of publication of application: **24.06.2026**
(21) Application number: 24307279.0
(22) Date of filing: 23.12.2024
(51) Int. Cl.: F25J 1/02, H01M 8/04014, H01M 8/04007, H01M 8/04119, H01M 8/0637, H01M 8/0668, H01M 8/124, H01M 8/0612

(54) **CAPTURED CARBON LIQUEFICATION COOLING USING LIQUEFIED NATURAL GAS**

(71) Applicant: Technip Energies France, 92741 Nanterre Cedex (FR)
(72) Inventor: PAWAR, Dhairyasheel, 92741 Nanterre Cedex (FR)
(74) Representative: Edson, Russell Gregory

(57) **Abstract**

A system and method of generating electrical energy using a fuel cell while decarbonizing an exhaust gas generated by the fuel cell is disclosed. Heat generated by an electrochemical reaction within the fuel cell can be recovered at both an anode side and a cathode side of the fuel cell, and at least some of the recovered heat can be used to preheat each of a natural gas fuel feed and an oxidant supplied to the fuel cell. A carbon capture system may be included and used to capture and liquefy carbon dioxide present in an anodic exhaust gas emitted by the fuel cell. The liquefaction subsystem of the carbon capture system may utilize liquefied natural gas from which the natural gas fuel feed is derived as a cooling media for liquefying captured and compressed carbon dioxide.

## Description

### Technical Field

The present disclosure relates generally to fuel cell powered electrical energy generation, and more particularly although not necessarily exclusively, to decarbonizing a fuel cell powered electrical energy generation process.

### Background

Fuel cells, including high temperature fuel cells such as solid oxide fuel cells (SOFC) or Protonic Ceramic Fuel Cells (PCFCs), may be usable as a mechanism for producing electrical energy. Electrical energy produced via fuel cells may be used, for example, in onshore applications such as industrial processes or in offshore applications such as maritime transportation applications. When used to generate electrical energy, such fuel cells may be operated using a number of different fuels including, for example, liquefied natural gas (LNG), ammonia, and methane. Fuel cell based electrical energy generation plants may, at least in some cases, operate with a higher efficiency than conventional coal or gas fired electrical energy generation plants. As the process of generating electrical energy using fuel cells produces carbon dioxide as a byproduct of operation, fuel cell powered electrical energy generation processes may also be good candidates for decarbonization.

### Summary

As used below, any reference to a series of examples is to be understood as a reference to each of those examples disjunctively (e.g., "Examples 1-4" or "Examples 1 to 4" is to be understood as "Examples 1, 2, 3, or 4").

Example No. 1 is an electrical energy generation system including a fuel cell having an anode and a cathode separated by and in contact with an electrolyte. An anodic heat recovery subsystem is usable to preheat a fuel suppliable to the anode using heat recovered from an anodic exhaust gas produced by electrochemical reactions within the fuel cell. A carbon capture system for capturing and liquefying carbon dioxide present in the anodic exhaust gas is also included, the carbon capture system having a gas compression subsystem and a liquefaction subsystem. The liquefaction subsystem is interposed between a liquefied natural gas supply and the fuel cell to receive a stream of the liquefied natural gas and to utilize the liquefied natural gas as a cooling media to liquefy carbon dioxide captured from the anodic exhaust gas prior to directing a feed of natural gas as the fuel to the anode of the fuel cell.

Example No. 2 is Example No. 1, wherein the fuel cell is a solid oxide fuel cell or a protonic ceramic fuel cell.

Example No. 3 is Example No. 1 or Example No. 2, wherein the anodic heat recovery subsystem includes a plurality of heat recovery exchangers arranged one above the other within a vertical chamber defined by an enclosure of a first heat exchanger unit having an inlet in fluid communication with an anode side outlet of the fuel cell. The plurality of heat recovery exchangers are arranged for passage therethrough of a stream of the anodic exhaust gas, and heat from the anodic exhaust gas is transferable to the feed of natural gas by the plurality of heat recovery exchangers.

Example No. 4 is Example No. 3, wherein the plurality of heat recovery exchangers of the first heat exchanger unit are plate and frame type heat exchangers that are stacked within the enclosure.

Example No. 5 is Example No. 3 or Example No. 4, wherein a downstream water separation unit is interposed between the first heat exchanger unit and the gas compression subsystem of the carbon capture system. The water separation unit includes a heat exchanger and a cooling device arranged in an anodic exhaust gas flow path; and is usable to separate water from one or more gases in the anodic exhaust gas by condensing the water, and to direct a reduced water content anodic exhaust gas to the gas compression subsystem.

Example No. 6 is any one of Example No. 1 to Example No. 5, further including a cathodic heat recovery subsystem usable to preheat an oxidant suppliable to the cathode using heat recovered from a cathodic exhaust gas produced by electrochemical reactions within the fuel cell. The cathodic heat recovery subsystem includes a plurality of heat recovery exchangers arranged one above the other within a vertical chamber defined by an enclosure of a second heat exchanger unit having an inlet in fluid communication with a cathode side outlet of the fuel cell. The plurality of heat recovery exchangers are arranged for passage therethrough of a stream of the cathodic exhaust gas, and heat from the cathodic exhaust gas is transferable to the oxidant by the plurality of heat recovery exchangers.

Example No. 7 is any one of Example No. 1 to Example No. 6, further including a membrane separator interposed between the gas compression subsystem and the liquefaction subsystem of the carbon capture system to separate carbon dioxide from one or more other gases present in a compressed gas stream discharged by the gas compression subsystem.

Example No. 8 is any one of Example No. 1 to Example No. 7, wherein the liquefaction subsystem is arranged to receive a stream of compressed gas from the gas compression subsystem and includes a liquefaction cooling device, a liquefaction subcooling device, a liquefied natural gas vaporizer, and an expander-compressor unit. Natural gas resulting from vaporization of the stream of the liquefied natural gas is expandable by an expander of the expander-compressor unit into a reduced pressure stream of natural gas that is usable as a cooling media by the liquefaction cooling device and the liquefaction subcooling device to liquefy compressed gaseous carbon dioxide, and the reduced pressure stream of natural gas is subsequently receivable and compressible by a compressor of the expander-compressor unit into a feed stream of pressurized natural gas for introduction to an anode side of the fuel cell.

Example No. 9 is a carbon capture system for decarbonizing an anodic exhaust gas produced by an anode side of an electrical energy generation system fuel cell and includes a gas compression subsystem arranged to receive the anodic exhaust gas from the anode side of the fuel cell. The gas compression subsystem includes at least one exhaust gas compressor to compress the anodic exhaust gas, and at least one compression cooling device to cool the anodic exhaust gas during compression thereof by the at least one exhaust gas compressor. A liquefaction subsystem is arranged to receive a stream of compressed gaseous carbon dioxide from the gas compression subsystem and a stream of liquefied natural gas from a supply of liquefied natural gas. The gaseous carbon dioxide is condensable into liquefied carbon dioxide by the liquefaction subsystem by transferring heat from the compressed gaseous carbon dioxide to the liquefied natural gas.

Example No. 10 is Example No. 9, further including a water-gas shift reactor interposed between the fuel cell and the gas compression subsystem in a flow path of the anodic exhaust gas to convert carbon monoxide in the anodic exhaust gas to carbon dioxide.

Example No. 11 is Example No. 10, further including a water removal unit interposed between the water-gas shift reactor and the gas compression subsystem in a flow path of the anodic exhaust gas. The water removal unit includes a water removal heat exchanger arranged to receive the anodic exhaust gas from the water-gas shift reactor and to direct the anodic exhaust gas to a water removal cooling device to condense the water by cooling of the anodic exhaust gas. A condensate collection vessel is located downstream of the water removal cooling device to collect and store water condensate, and a pump is in fluid communication with the condensate collection vessel to direct the water condensate, via the water removal heat exchanger, to a fuel feed that is suppliable to the anode side of the fuel cell.

Example No. 12 is any one of Example No. 9 to Example No. 11, wherein the liquefaction subsystem includes a liquefaction cooling device, a liquefaction subcooling device, a liquefied natural gas vaporizer, and an expander-compressor unit. Natural gas resulting from vaporization of the stream of the liquefied natural gas is expandable by an expander of the expander-compressor unit into a reduced pressure stream of natural gas that is usable as a cooling media by the liquefaction subsystem to liquefy compressed gaseous carbon dioxide. The reduced pressure stream of natural gas is subsequently receivable and compressible by a compressor of the expander-compressor unit into a feed stream of pressurized natural gas for introduction to the anode side of the fuel cell.

Example No. 13 is any one of Example No. 9 to Example No. 12, wherein a membrane separator is interposed between the gas compression subsystem and the liquefaction subsystem; compressed gaseous carbon dioxide is separable by the separator from at least some amount of other gases in a stream of compressed gas discharged from the gas compression subsystem, and the compressed gaseous carbon dioxide is thereafter directable to the liquefaction subsystem.

Example No. 14 is Example No. 13, further including a recycled fuel feed flow path between the membrane separator and the fuel cell by which the at least some amount of other gases is directable to the anode side of the fuel cell.

Example No. 15 is a method of operating an electrical energy generation system including, at a fuel cell having an anode and a cathode separated by and in contact with an electrolyte, supplying a natural gas fuel feed to the anode and an oxidant to the cathode to cause electrochemical reactions within the fuel cell by which chemical energy in the fuel is converted into electrical energy. The the natural gas fuel feed is subsequently preheated using heat recovered from an anodic exhaust gas produced by the electrochemical reactions within the fuel cell. The method also includes capturing and liquefying carbon dioxide present in the anodic exhaust gas using a carbon capture system having a gas compression subsystem and a liquefaction subsystem. The gas compression subsystem compresses carbon dioxide present in an anodic exhaust gas produced by the fuel cell and discharges a stream of compressed gaseous carbon dioxide. The liquefaction subsystem receives a stream of liquefied natural gas from a supply of liquefied natural gas and liquefies the compressed gaseous carbon dioxide by transferring heat from the gaseous carbon dioxide to the liquefied natural gas.

Example No. 16 is Example No. 15, wherein the heat used to preheat the natural gas fuel feed is recovered from the anodic exhaust gas by passing the anodic exhaust gas through at least one heat recovery exchanger arranged within a vertical chamber defined by an enclosure of a first heat exchanger unit having an inlet in fluid communication with an anode side outlet of the fuel cell.

Example No. 17 is Example No. 15 or Example No. 16, wherein water is removed from the anodic exhaust gas at a location upstream of the gas compression subsystem by passing the anodic exhaust gas through a water removal heat exchanger and a water removal cooling device of a water removal unit to condense the water by cooling of the anodic exhaust gas, and water condensate is collected and stored in a condensate collection vessel of the water removal unit that is located downstream of the water removal cooling device. A water-steam mixture is generated by directing the water condensate from the condensate collection vessel to the water removal heat exchanger and transferring heat from the anodic exhaust gas to the water condensate, and the water-steam mixture is directed from the water removal heat exchanger to the natural gas fuel feed to the anode of the fuel cell.

Example No. 18 is any one of Example No. 15 to Example No. 17, wherein a membrane separator is used to separate the compressed gaseous carbon dioxide from other gases discharged with the compressed gaseous carbon dioxide from the gas compression subsystem, and at least some of the other gases are introduced into the natural gas fuel feed.

Example No. 19 is any one of Example No. 15 to Example No. 18, wherein the liquefaction subsystem includes a liquefaction cooling device, a liquefaction subcooling device, a liquefied natural gas vaporizer, and an expander-compressor unit. The liquefied natural gas is vaporized by the vaporizer into natural gas and the natural gas is thereafter discharged to and expanded by an expander of the expander-compressor unit into a reduced pressure stream of natural gas that is used as a cooling media by the liquefaction subsystem to liquefy compressed gaseous carbon dioxide. The reduced pressure stream of natural gas is subsequently received and compressed by a compressor of the expander-compressor unit into a feed stream of pressurized natural gas that is introduced to an anode side of the fuel cell.

Example No. 20 is Example No. 19, wherein the stream of liquefied natural gas is vaporized by the vaporizer by transferring heat to the stream of liquefied natural gas from the stream of gaseous carbon dioxide, which is discharged from the liquefaction cooling device and received at the vaporizer.

Example No. 21 is any one of Example No. 15 to Example No. 20, wherein the compressed gaseous carbon dioxide is at a pressure of approximately 30 bar where a boiling point of the compressed carbon dioxide is approximately -16 °C, and all cooling energy required to liquefy the compressed gaseous carbon dioxide is provided by the stream of liquefied natural gas.

### Brief Description of the Drawings

FIG. 1 is a block diagram of fuel cell powered electrical energy generation system, according to one example configuration.
FIG. 2 is a schematic representation of the fuel cell powered electrical energy generation system of FIG. 1.
FIG. 3 is a flowchart describing one example of a method of capturing and liquefying carbon dioxide produced when generating electrical energy using a fuel cell.

### Detailed Description

Certain aspects and examples of the present disclosure relate to a system and method for decarbonizing a process of generating electrical energy using a fuel cell. More particularly, the inherently cold temperature of a liquefied natural gas supply stream can be used in the process of liquefying captured carbon dioxide generated by the electrical energy generation process.

In a fuel-cell-powered electrical-energy generation system, a natural gas stream, which results from a warming of the liquefied natural gas during use thereof in the carbon dioxide liquefaction process, can be supplied to an anode of the fuel cell. An oxidant can be supplied to a cathode of the fuel cell. Supplying the natural gas to the anode while supplying the oxidant to the cathode causes electrochemical reactions to occur within the fuel cell that convert chemical energy in the fuel into electrical energy.

In some examples, the fuel cell may be a solid oxide fuel cell (SOFC). A solid oxide fuel cell may include a solid electrolyte layer interposed between and in contact with each of an anode and a cathode. In some examples, the fuel cell may be a stack of multiple anode-cathode-electrolyte cells, which may be connected in series to produce a fuel cell of greater electrical energy output.

Both the natural gas fuel supplied to the anode and the oxidant supplied to the cathode are preferably supplied at elevated temperatures of, for example, about 600 °C. In some examples, heat recovered from the anode side of the fuel cell can be used, at least in part, to preheat a stream of the natural gas supplied to the anode as a fuel. In some examples, heat recovered from the cathode side of the fuel cell can be used, at least in part, to preheat a stream of the oxidant supplied to the cathode. For example, heat output from the anode side of the fuel cell may be circulated along with the natural gas fuel stream through a first heat exchanger structure wherein at least some of the heat can be used to preheat the natural gas fuel stream prior to the natural gas fuel being supplied to the anode. Likewise, heat output from the cathode side of the fuel cell may be circulated along with the oxidant through a second heat exchanger structure wherein at least some of the heat can be used to preheat the oxidant prior to the oxidant being supplied to the cathode. This preheating process using recovered heat can at least supplement other heating of the natural gas fuel and the oxidant to more efficiently provide each of the natural gas fuel and the oxidant to the respective anode and cathode at a desired temperature or within a desired temperature range.

An exhaust gas stream emitted from the anode side of the fuel cell as a result of the electrochemical reactions occurring across the electrolyte may contain a mixture of, for example, carbon monoxide, carbon dioxide, hydrogen, and water. For environmental reasons, it is desirable that the presence of carbon monoxide within the exhaust gas stream is minimized and that as much carbon dioxide as possible is captured and either sequestered or used for other purposes. Thus, in some examples, a fuel cell powered electrical energy generation system may include additional components such as, but not limited to, a water-gas shift reactor, a water removal unit, and a carbon capture system.

In some examples, the water-gas shift reactor may be used to convert carbon monoxide in the exhaust gas stream to carbon dioxide, which can thereafter be captured by the downstream carbon capture system. Use of the water-gas shift reactor can also generate water and hydrogen, which can be supplied to the fuel to contribute to additional power generation. In some examples, the water-gas shift reactor may be located within an enclosure of the first heat exchanger structure and arranged such that the exhaust gas stream passes through the water-gas shift reactor.

Carbon dioxide in the anodic exhaust gas may be captured by the carbon capture system. The carbon capture system may include several components, which can cooperate to capture, liquefy, and store carbon dioxide in the anodic exhaust gas. For example, after being subjected to the water removal unit and having water removed therefrom, the anodic exhaust gas may be directed to a gas compression subsystem of the carbon capture system to pressurize the anodic exhaust gas. In some examples, the gas compression subsystem may include a plurality of compressors, which may be arranged to provide multiple anodic exhaust gas compression stages. The gas compression subsystem may also include multiple cooling devices configured to cool the anodic exhaust gas during the compression operation.

After being compressed by the gas compression subsystem, the anodic exhaust gas may still contain a mixture of gases. For example, in addition to carbon dioxide, the anodic exhaust gas may include at least some amount of hydrogen and/or other gases resulting from the electrochemical reactions in the fuel cell. The carbon dioxide may be separated from any hydrogen and other constituents in the anodic exhaust gas by directing the compressed anodic exhaust gas through a separator of the carbon capture system.

The extracted (captured) carbon dioxide from the exhaust gas may thereafter be directed to a liquefaction subsystem of the carbon capture system. Within the liquefaction subsystem, the compressed carbon dioxide can be condensed by cooling and subcooling to form liquefied carbon dioxide.

The cooling and subcooling of the compressed carbon dioxide during the liquefaction process may be effectuated using the liquefied natural gas as a cooling media. The liquefied natural gas fuel can be vaporized by a vaporizer of the carbon capture system. A stream of vaporized natural gas can then be directed to other carbon capture system components, where it can be further transformed before being circulated through a cooler and a subcooler of the carbon capture system to lower the temperature of the compressed carbon dioxide to a level required for liquefaction. Once the captured carbon dioxide has been liquefied by the liquefaction subsystem, the liquefied carbon dioxide may be stored in one or more storage tanks or transferred to another location for storage, sequestration, or use. In some examples, the liquefied carbon dioxide may be stored in a tank previously occupied by liquefied natural gas. That is, to minimize the layout and reduce the cost of storage, a combination LNG-liquefied carbon dioxide storage tank may be employed including multiple (e.g., at least 3) tanks that can be switched from LNG to liquefied carbon dioxide storage. For example, two of the three tanks in such an example can store the LNG fuel supply and, as the first tank is drained, it can be utilized to store liquefied carbon dioxide. In such a case, tanks capable of withstanding the low temperature of LNG gas (i.e., -164 °C) and an approximate 7 bar to 30 bar pressure of liquefied carbon dioxide may be utilized.

The carbon capture system may also include an expander-compressor unit. The expander of the expander-compressor unit may be used to expand the vaporized liquefied natural gas, which lowers the pressure and reduces the temperature thereof. For example, the lowered pressure of the vaporized liquefied natural gas may be between 1 bar to 5 bar. The compressor of the expander-compressor unit, which is driven by the expander, can be used to increase the pressure of the above-described stream of natural gas to ensure that the natural gas stream is at an acceptable pressure for introduction into the anode side of the fuel cell, such as a pressure of approximately 1 bar.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

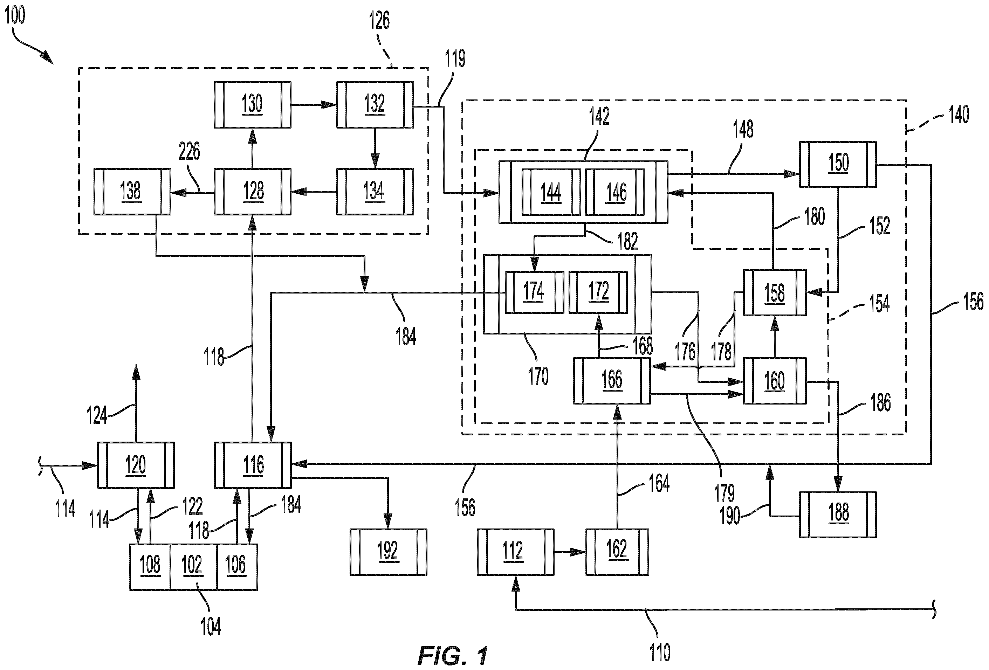

FIG. 1 is a block diagram of an electrical energy generation system 100, according to one example configuration. As shown in FIG. 1, the electrical energy generation system 100 includes a fuel cell 102. In this example, the fuel cell 102 is a solid oxide fuel cell (SOFC) having solid electrolyte layer 104 interposed between and in contact with each of an anode 106 and a cathode 108. The fuel cell 102 may be a stack of multiple anode-cathode-electrolyte cells, which may be connected in series to provide the fuel cell 102 with a greater electrical energy output.

A stream of liquefied natural gas 110 from a liquefied natural gas source (not shown) may initially be directed to a fuel storage tank 112 that is interposed between the liquefied natural gas source and the fuel cell 102. As described in more detail below, a stream of pressurized natural gas 184 resulting from use of the liquefied natural gas as a cooling media in a captured carbon dioxide liquefaction process may be supplied as a fuel to the anode side of the fuel cell 102. Likewise, an oxidant 114, such as air, may be supplied to the cathode side of the fuel cell 102. Supplying the pressurized natural gas 184 to the anode side of the fuel cell 102 while supplying the oxidant 114 to the cathode side of the fuel cell 102 causes electrochemical reactions to occur within the fuel cell 102 that convert chemical energy in the liquefied natural gas fuel into electrical energy.

As can be observed in FIG. 1, liquefied natural gas 110 from the fuel tank 112 may be introduced to a pump 162, which can thereafter direct a stream of pressurized liquefied natural gas 164 to the carbon capture system 140. The inherently low temperature of the liquefied natural gas can be used by the carbon capture system 140 in a cooling and subcooling operation associated with the carbon dioxide liquefaction process.

After circulation through various components of the carbon capture system 140, the liquefied natural gas reverts to its gaseous state, and the stream of pressurized natural gas 184 may be generated and directed through a first heat exchanger unit 116 into the anode side of the fuel cell 102. The first heat exchanger unit 116 can be configured to preheat the pressurized natural gas 184 using, at least in part, heat recovered from an anodic exhaust gas 118 resulting from the electrochemical reactions within the fuel cell 102. The anodic exhaust gas 118 may be emitted from an anode side of the fuel cell 102 and directed into the first heat exchanger unit 116. In some examples, a water-gas shift reactor may be located within the first heat exchanger unit 116 and used to convert carbon monoxide in the anodic exhaust gas 118 to carbon dioxide.

In a similar manner to the stream of pressurized natural gas 184, the oxidant 114 may pass through a second heat exchanger unit 120 prior to being introduced into the cathode side of the fuel cell 102. The second heat exchanger unit 120 can be configured to preheat the oxidant using, at least in part, using heat recovered from a cathodic exhaust gas 122 resulting from the electrochemical reactions within the fuel cell 102. The cathodic exhaust gas 122 may be emitted from a cathode side outlet of the fuel cell 102 and directed into a second heat exchanger unit 120. A portion 124 of the cathodic exhaust gas can also be discharged into the atmosphere or may be subjected to a nitrogen recovery process.

The stream of anodic exhaust gas 118, having lost some of its heat by preheating the pressurized natural gas 184 fuel feed, may flow upward and eventually exit the first heat exchanger unit 116 to be further processed by additional downstream system components. As an initial step, a downstream water removal unit 126 may be utilized to remove water from the anodic exhaust gas 118 by condensing the water. In this regard, examples of the water removal unit 126 may include a downstream heat exchanger 128 and a water removal cooling device 130 through which flows the anodic exhaust gas 118, a condensate collection vessel such as a condensate drum 132, and a condensate pump 134. Water condensate 136 collected in the condensate drum 132 may be converted to a water-steam mixture 226 in the downstream heat exchanger 128, which can subsequently be routed to the pressurized natural gas 184 fuel feed from the carbon capture system 140 to the first heat exchanger unit 116. The water-steam mixture 226 may be heated in the first heat exchanger unit 116 along with the pressurized natural gas 184 before subsequently being provided to the anode side 106 of the fuel cell 102. In some examples, a water treatment unit 138 may be interposed between the downstream heat exchanger 128 and the first heat exchanger unit 116 to remove impurities and the like from the water-steam mixture 226 before it is introduced into the liquefied natural gas fuel feed 110.

After water has been removed from the anodic exhaust gas 118 by the water removal unit 126, carbon dioxide in the dewatered anodic exhaust gas 119 may be captured by the carbon capture system 140 of the electrical energy generation system 100. In order to liquefy carbon dioxide, the pressure of the carbon dioxide must be above 5 bar, as carbon dioxide does cannot exist in a liquid state below this pressure. Hence, the dewatered anodic exhaust gas 119 may be initially directed to a gas compression subsystem 142 of the carbon capture system 140 to increase the pressure of the dewatered anodic exhaust gas 119. In some examples, the gas compression subsystem may include one or more exhaust gas compressors 144 for compressing the dewatered anodic exhaust gas 119 and one or more compression cooling devices 146 for cooling the dewatered anodic exhaust gas 119 during the compression operation. A compressed gas stream 148 can be discharged from the gas compression subsystem 142 and directed to further downstream carbon capture components and operations.

The compressed gas stream 148 discharged from the gas compression subsystem 142 may contain other gases (e.g., hydrogen) in addition to carbon dioxide. The carbon dioxide may be separated from other gases in the compressed gas stream 148 prior to being subjected to further carbon capture operations. For example, the carbon dioxide may be separated from the other gases by passing the compressed gas stream 148 through an optional separator 150. In this example, the separator 150 is a membrane separator. Compressed gaseous carbon dioxide 152 separated from the compressed gas stream 148 may thereafter be directed to a liquefaction subsystem 154 of the carbon capture system 140. In some examples, a gas(es) such as hydrogen that has been separated from the carbon dioxide by the separator 150 may be directed to the first heat exchanger unit 116 as a recycled fuel feed 156 for the anode 106 of the fuel cell 102. A pre-reformer 192 may be provided to convert non-natural gas components in the recycled fuel feed 156 to a methane/syngas mixture prior to its introduction into the anode side of the fuel cell 102.

The compressed gaseous carbon dioxide 152 can be liquefied by the liquefaction subsystem 154. To that end, the liquefaction subsystem 154 may include, for example, a liquefaction cooling device 158 and a liquefaction subcooling device 160 via which the temperature of the gaseous carbon dioxide 152 can be reduced to or below a critical temperature necessary for liquefaction. In some examples, liquefied carbon dioxide 186 can be discharged from the liquefaction subsystem 154 of the carbon capture system 140 and directed to the one or more storage tanks 188. In other examples, liquefied carbon dioxide 186 can be discharged from the liquefaction subsystem 154 and transferred to another location for storage, sequestration, or use. When liquefied carbon dioxide 186 is stored in the one or more storage tanks 188, non-condensed gas(es) (e.g., hydrogen) 190 present in the liquefied carbon dioxide 186 may, in some examples, be added to the recycled fuel feed 156 supplied to the anode side of the fuel cell 102. When present, boil-off-gas in the liquefied carbon dioxide stored in the one or more storage tanks 188 may also be emitted from the one or more storage tanks 188 with the gas stream 190 and may be added to the recycled fuel feed 156 supplied to the anode side of the fuel cell 102. In another example, non-condensed gas(es) and/or boil-off-gas 190 emitted from the outlet(s) of the one or more storage tanks 188 may be added to the liquefied natural gas stream discharged from the fuel storage tank 112. In another example, non-condensed gas(es) and/or boil-off-gas 190 emitted from the outlet(s) of the one or more storage tanks 188 may be mixed with a stream of reduced pressure natural gas 176 discharged from an expander 172 and directed to a sub-cooling device 160. In another example, non-condensed gas(es) and/or boil-off-gas 190 emitted from the outlet(s) of the one or more storage tanks 188 may be mixed with a stream of pressurized natural gas 184 discharged from a compressor 174 of an expander-compressor unit 170.

The inherently cold temperature of the liquified natural gas of the liquified natural gas fuel feed 110 can be used as a cooling media to condense and liquefy the compressed gaseous carbon dioxide 152. In another example, an intermediate fluid may be used to recover the cold energy of the liquified natural gas 110 and transmit it to the carbon dioxide 152. In the example of the electrical energy generation system 100 of FIG. 1, the stream of pressurized liquefied natural gas 164 produced by the pump 162 may be a high-pressure stream (e.g., approximately 30 bar), which may be directed to a vaporizer 166. The vaporizer 166 may perform multiple functions. For example, the vaporizer 166 can heat the stream of pressurized liquefied natural gas 164 to a vaporization temperature (e.g., -96 °C at a pressure of 30 bar). The vaporizer 166 may also vaporize the heated stream of pressurized liquified natural gas 164 to generate a stream of vaporized natural gas 168. Additionally, the vaporizer can heat the vaporized NG from, for example, -96 °C to a temperature close to the compressed carbon dioxide liquefaction temperature (with some temperature differential to allow for an efficient heat exchange). In other examples, the vaporizer 166 may be more than one vaporizer. For example, a first vaporizer may be provided to heat the stream of pressurized liquefied natural gas 164, and a second vaporizer 166 may be provided to vaporize the stream of pressurized liquefied natural gas 164 and to further heat the stream of vaporized natural gas 168.

The stream of vaporized natural gas 168 may thereafter be directed to an expander 172 of an expander-compressor unit 170 (which also includes a compressor 174 that is usable for purposes described in more detail below). The expander 172 can reduce the pressure and temperature of the stream of vaporized natural gas 168, and can subsequently discharge a stream of reduced pressure of natural gas 176 to the subcooling device 160 of the liquefaction subsystem 154.

At the subcooling device 160, the reduced temperature of the reduced pressure natural gas 176 facilitates use of the reduced pressure natural gas 176 as a cooling media for subcooling condensed carbon dioxide 179 that is received by the liquefaction subcooling device 160 from the vaporizer 166. The reduced pressure natural gas 176 may also be circulated to the liquefaction cooling device 158 to allow the liquefaction cooling device 158 to cool the gaseous carbon dioxide 152 discharged from the membrane separator 150. In some examples, a warmed stream of natural gas 180 discharged by the liquefaction cooling device 158 can be directed to a compression cooling device 146 of the gas compression subsystem 142 to help dry the anodic exhaust gas 118 during compression thereof.

After being used to help dry the anodic exhaust gas 118 in the gas compression subsystem 142 of the carbon capture system 140, a discharge stream of low pressure natural gas 182 may be directed from the gas compression subsystem 142 to the compressor 174 of the expander-compressor unit 170. The compressor 174 can increase the pressure of the discharge stream of low pressure natural gas 182 received from the gas compression subsystem 142, and can discharge a feed stream of pressurized natural gas 184 to the first heat exchanger unit 116 for preheating prior to introduction into the anode side 106 of the fuel cell 102 as a fuel feed.

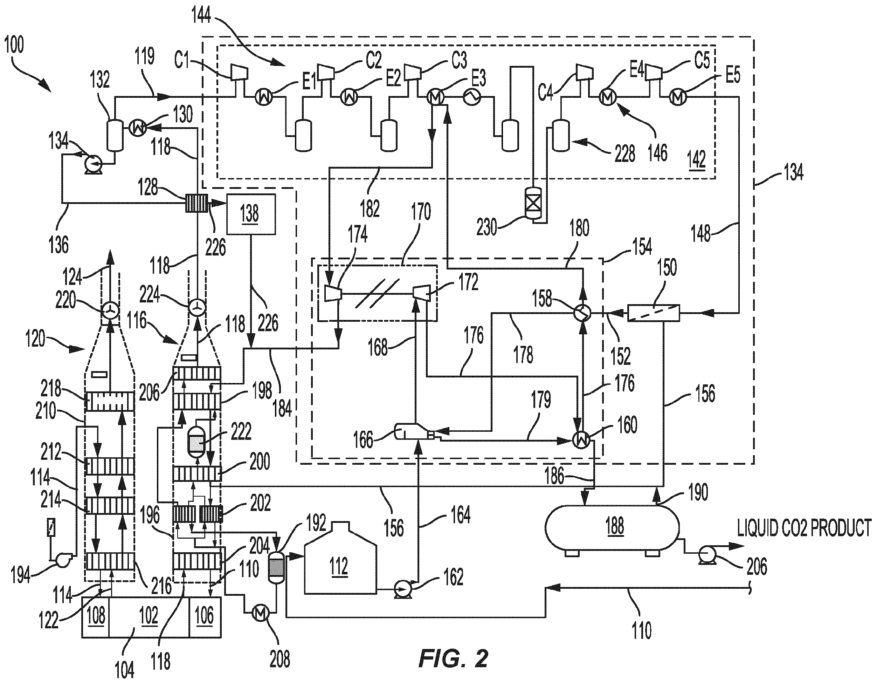

FIG. 2 is a block diagram providing a more detailed view of the electrical energy generation system 100 of FIG. 1. The SOFC fuel cell 102 may be observed at the bottom-left of FIG. 2 and can be seen to include the solid electrolyte layer 104 interposed between and in contact with each of the anode 106 and the cathode 108. While only a single anode 106 and a single cathode 108 are shown for clarity, the fuel cell 102 is likely to be, in practice, a stack of multiple anode-cathode-electrolyte cells, which may be connected in series to provide the fuel cell 102 with a greater electrical energy output. Thus, in some examples the fuel cell 102 may include a single anode and a single cathode, while in other examples the fuel cell may include a plurality of anodes and a plurality of cathodes. The fuel cell 102 may operate at high temperatures. For example, the fuel cell 102 may operate at a temperature of about 800 °C.

In this system example, the fuel storage tank 112 may store some amount of liquefied natural gas for supply to the carbon capture system 140 for use in liquefying captured carbon dioxide, and for subsequent supply as natural gas fuel to the anode 106 of the fuel cell 102. The fuel storage tank 112 may be associated with a cooling device if necessary to maintain the liquefied natural gas in a liquid state. Liquefied natural gas 110 from the fuel tank 112 may be introduced to the pump 162 or to another suitable device by which a pressurized stream of liquefied natural gas 164 can be generated. The pressurized stream of liquefied natural gas 164 may be initially provided to the carbon capture system 140 and used in a cooling and subcooling operation associated with liquefying captured carbon dioxide. The liquefied natural gas absorbs heat and loses pressure during the cooling and subcooling operation, which causes the liquefied natural gas to revert to its natural gaseous state. As described in more detail below, the natural gas is then repressurized to ensure that the pressure of the natural gas is sufficient when passing through the first heat exchanger unit 116 and at an inlet to the anode side of the fuel cell 102, and a stream of pressurized natural gas 184 is directed to the fuel cell 102 through the first heat exchanger unit 116.

The oxidant 114 (e.g., air or oxygen) is shown to be supplied to the cathode side of the fuel cell 102 after passing through the second heat exchanger unit 120. An oxidant blower 194 may be provided to ensure that the pressure of the oxidant 114 is sufficient when passing through the second heat exchanger unit 120 and at an inlet of the cathode side of the fuel cell 102.

As can be observed, the first heat exchanger unit 116 may include an enclosure 196 configured to form a vertical chamber. One or more heat exchangers may be located and arranged within the chamber of the enclosure 196. In this example, the one or more heat exchangers is a series of heat exchangers 198, 200, 202, 204, 206 that are arranged one of above another from a lower portion of the chamber to an upper portion of the chamber to facilitate passage therethrough of a natural upward flow of the anodic exhaust gas 118 within the chamber. This arrangement of the heat exchangers 198, 200, 202, 204, 206 can avoid the need to provide separate pipelines or joints between the heat exchangers and also helps to minimize pressure drop within the system.

In this example of the first heat exchanger unit 116, the heat exchangers 198, 200, 202, 204, 206 include an anode side first heat recovery exchanger 198, an anode side second heat recovery exchanger 200, an anode side third heat recovery exchanger 202, and an anode side fourth heat recovery exchanger 204. The anode side first heat recovery exchanger 198 and the anode side second heat recovery exchanger 200 cooperate to preheat the stream of pressurized natural gas 184 before the stream of pressurized natural gas 184 is introduced to the anode side of the fuel cell 102. Given the location of introduction of the stream of pressurized natural gas 184 to the first heat exchanger unit 116 in this example, the anode side first heat recovery exchanger 198 resides above the anode side second heat recovery exchanger 200, such that the anode side first heat recovery exchanger 198 initially receives and preheats the stream of pressurized natural gas 184 before directing the stream of pressurized natural gas 184 to the anode side second heat recovery exchanger 200 for further preheating.

In this example of the first heat exchanger unit 116, the anode side third heat recovery exchanger 202 and the anode side fourth heat recovery exchanger 204 cooperate to further heat the already preheated stream of pressurized natural gas 184, and also to preheat the recycled fuel feed 156 directed to the anode side of the fuel cell 102 from the carbon capture system 140. Given the location of introduction of the recycled fuel feed 156 to the first heat exchanger unit 116 in this example, the anode side third heat recovery exchanger 202 resides above the anode side fourth heat recovery exchanger 204, such that the anode side third heat recovery exchanger 202 initially receives and further heats the stream of pressurized natural gas 184 and receives and initially preheats the recycled fuel feed 156 before directing both to the anode side fourth heat recovery exchanger 204 for further heating.

As illustrated in FIG. 2, the anode side third heat recovery exchanger 202 may employ a split flow, or separate heat exchangers may be used, such that the heated stream of pressurized natural gas 184 may be directed to the anode side fourth heat recovery exchanger 204 and then to the anode side of the fuel cell 102, while the preheated recycled fuel feed 156 may be routed to the pre-reformer 192 before passing through the anode side fourth heat recovery exchanger 204 and entering the anode side of the fuel cell 102. The pre-reformer 192 can convert non-natural gas components in the recycled fuel feed 156 to a gas mixture comprising hydrocarbons heavier than methane prior to introduction into the anode side of the fuel cell 102. A small amount of methane may also be reformed by the pre-reformer 192. The pre-reformer 192 may include a heating device 208, such as an electric heater, through which the recycled fuel feed 156 passes prior to introduction to the anode side of the fuel cell 102 as a mixture with the stream of pressurized natural gas 184.

The heat exchangers 198, 200, 202, 204, 206 may also include an anodic exhaust gas cooling heat exchanger 206 that is located to be superjacent to the other heat exchangers 198, 200, 202, 204. The anodic exhaust gas 118 may pass through the anodic exhaust gas cooling heat exchanger 206 after transferring heat to the stream of pressurized natural gas 184 and the recycled fuel feed 156 in the other heater exchangers 198, 200, 202, 204 to remove any excess heat that may still remains in the anodic exhaust gas 118. The anodic exhaust gas 118 may be cooled in the anodic exhaust gas cooling heat exchanger 206 by transferring additional heat to a cooling medium (e.g., water) prior to discharge of the anodic exhaust gas 118 from the first heat exchanger unit 116. Water heated in the anodic exhaust gas cooling heat exchanger 206 may be used by the electrical energy generation system 100, or in another process.

Preheating of the stream of pressurized natural gas 184 and the recycled fuel feed 156 may be accomplished, at least in part, using heat recovered from the anodic exhaust gas 118 that is discharged from the anode side of the fuel cell 102 and passes upward through the first heat exchanger unit 116 and the individual heat exchangers 196, 198, 200, 202, 204, 206 located therein. The anodic exhaust gas 118 is typically a high temperature gas stream. For example, the temperature of the anodic exhaust gas 118 may be approximately 800 °C, which renders the anodic exhaust gas 118 highly effective for preheating the stream of pressurized natural gas 184 and the recycled fuel feed 156.

In some examples, heat recovered from the anodic exhaust gas 118 may be usable to increase the temperature of the stream of pressurized natural gas 184 and the recycled fuel feed 156 to 250 °C or more. When required, supplemental heating may be provided to further raise the temperature of the stream of pressurized natural gas 184 and the recycled fuel feed 156 to approximately 600 °C prior to introducing the stream of pressurized natural gas 184 and the recycled fuel feed 156 into the anode side of the fuel cell.

The second heat exchanger unit 120 may also include an enclosure 210 configured to form a vertical chamber. One or more heat exchangers may be located and arranged within the chamber of the enclosure 210. In this example, the one or more heat exchangers includes four heat exchangers 212, 214, 216, 218 arranged one of above another to facilitate passage therethrough of a natural upward flow of the cathodic exhaust gas 122 within the chamber. As with the first heat exchanger unit 116, this can avoid the need to provide separate pipelines or joints between the heat exchangers 212, 214, 216, 218 and also helps to minimize any pressure drop within the system.

In this example of the second heat exchanger unit 120, the heat exchangers 212, 214, 216, 218 may include, for example, a cathode side first heat recovery exchanger 212, a cathode side second heat recovery exchanger 214, and a cathode side third heat recovery exchanger 216. The cathode side heat recovery exchangers 212, 214, 216 may preheat the oxidant 114 using heat recovered from the cathodic exhaust gas 122 prior to the oxidant 114 being introduced to the cathode side of the fuel cell 102. Given the location of introduction of the oxidant 114 to the second heat exchanger unit 120 in this example, the cathode side first heat recovery exchanger 212 resides above the cathode side second heat recovery exchanger 214, which resides above the cathode side third heat recovery exchanger 216. As such, the cathode side first heat recovery exchanger 212 initially receives and preheats the oxidant before directing the oxidant 114 downstream, where it is further heated in succession by each of the cathode side second heat recovery exchanger 214 and the cathode side third heat recovery exchanger 216, respectively.

The heat exchangers 212, 214, 216, 218 of this example of the second heat exchanger unit 120 may also include a cathodic exhaust gas cooling heat exchanger 218 that is located to be superjacent to the other heat exchangers 212, 214, 216. The cathodic exhaust gas 122 may pass through the cathodic exhaust gas cooling heat exchanger 218 after transferring heat to the oxidant 114 in the other heat exchangers 212, 214, 216 to remove any excess heat that may still remains in the cathodic exhaust gas 118. The cathodic exhaust gas 122 may be cooled in the anodic exhaust gas cooling heat exchanger 218 by transferring additional heat to a cooling medium (e.g., water) prior to discharge of the cathodic exhaust gas 122 from the second heat exchanger unit 120. Water heated in the cathodic exhaust gas cooling heat exchanger 218 may be used by the electrical energy generation system 100, or in another process.

The cathodic exhaust gas 122 is typically a high temperature gas stream like the anodic exhaust gas 118. For example, the temperature of the cathodic exhaust gas 122 may also be approximately 800 °C, which renders the cathodic exhaust gas 122 highly effective for preheating the oxidant 114. In some examples, heat recovered from the cathodic exhaust gas 122 may be usable to increase the temperature of the oxidant 114 to 250 °C or more. When required, supplemental heating may be provided to further raise the temperature of the oxidant 114 to approximately 600 °C prior to introducing the oxidant 114 into the cathode side of the fuel cell 102.

The cathodic exhaust gas 122 is an oxygen-depleted gas, such as oxygen-depleted air. As previously mentioned, at least a portion 124 of the cathodic exhaust gas 122 may also be discharged into the atmosphere or may be directed to a nitrogen recovery system. In the latter case, recovered nitrogen may serve as a source of inert gas for different applications. A cathodic exhaust gas blower 220 may be associated with the second heat exchanger unit 120 to encourage movement of the cathodic exhaust gas 122 through the heat exchangers 212, 214, 216, 218 and to facilitate discharge of cathodic exhaust gas 122 to the atmosphere or to the nitrogen recovery system.

As illustrated herein, the heat exchangers 198, 200, 202, 204, 206 of the first heat exchanger unit 116 and the heat exchangers 212, 214, 216, 218 of the second heat exchanger unit 120 are plate and frame heat exchangers, which are stacked one above another within the respective enclosures 196, 210. Such a heat exchanger design can provide, among other advantages, a reduced heat exchanger unit, 116, 120 footprint. Heat recovery can also be maximized, as plate and frame type heat exchangers can be capable of achieving a temperature differential of less than 3 °C. Plate and frame type heat exchangers are also modular in nature, which can facilitate maintenance. In other examples, particularly if future fuel cell development results in usable high pressure SOFCs or PCFCs, the plate and frame type heat exchangers shown in the drawings figures may be replaced with a series of shell and tube heat exchangers.

Utilizing heat recovered from the anodic exhaust gas 118 to preheat the stream of pressurized natural gas 184 and the recycled fuel feed 156 reduces the temperature of the anodic exhaust gas 118, as does cooling the anodic exhaust gas 118 in the anodic exhaust gas cooling heat exchanger 206 prior to discharge of the anodic exhaust gas 118 from the first heat exchanger unit 116. The reduced temperature of the anode exhaust gas 118 can help to minimize the size of other downstream components of the electrical energy generation system 100.

To facilitate the carbon capture process associated with the anodic exhaust gas 118, the anodic exhaust gas 118 may be passed through a water-gas shift reactor 222. The water-gas shift reactor 222 may can be used to convert carbon monoxide in the anodic exhaust gas 118 to carbon dioxide and hydrogen. The carbon dioxide may be subsequently captured and liquefied by the downstream carbon capture system 140. In this example, the water-gas shift reactor 222 is located within the enclosure 196 of the first heat exchanger unit 116. In other examples, the water-gas shift reactor 222 may be external of the first heat exchanger unit 116 and the anodic exhaust gas 118 may be routed between the first heat exchanger unit 116 and the water-gas shift reactor 222. In either case, an operating temperature of the water-gas shift reactor 222 may be adjusted using heat recovered from the anodic exhaust gas 118. In some examples, the operating temperature of the water-gas shift reactor 222 may be maintained at or above a minimum operating temperature of about 180 °C using the recovered heat. The reaction that causes a conversion of carbon monoxide to carbon dioxide within the water-gas shift reactor 222 is an exothermic reaction. Thus, the temperature of the anodic exhaust gas 118 stream at the exit of the water-gas shift reactor 222 will be greater than the temperature of the anodic exhaust gas 118 stream at the inlet of the water-gas shift reactor 222. For example, the temperature of the anodic exhaust gas 118 stream at the exit of the water-gas shift reactor 222 may be a minimum of 250 °C in some examples. At least some of the heat reintroduced into the anodic exhaust gas 118 stream by the water-gas shift reaction may be removed, in this example of the first heat exchanger unit 116, by heat transfer that occurs at the anode side first heat recovery exchanger 198 and at the anodic exhaust gas cooling heat exchanger 206.

After passing through the heat exchangers 198, 200, 202, 204, 206 and the water-gas shift reactor 222, the anodic exhaust gas 118 may be directed to an anodic exhaust gas blower 224. The anodic exhaust gas blower 224 can ensure that the anodic exhaust gas 118 is properly discharged from the first heat exchanger unit 116 and can facilitate the flow of the anodic exhaust gas 118 to other downstream components of the electrical energy generation system 100.

The stream of the anodic exhaust gas 118 that exits the first heat exchanger unit 116 may contain, for example, hydrogen, water vapor, carbon monoxide, carbon dioxide, some unreacted hydrocarbon gas such as methane, and other reaction by-products and impurities. As such, the anodic exhaust gas 118 may be further processed by additional downstream system components. In this example, after passing through the anodic exhaust gas blower 224, the anodic exhaust gas 118 is directed to the downstream water removal unit 126, which is utilized to remove water from the anodic exhaust gas 118. The water removal unit 126 further includes the water removal heat exchanger 128 and is operative to remove water from the anodic exhaust gas 118 via condensation using the water removal cooling device 130. The anodic exhaust gas 118 discharged from the first heat exchanger unit 116 may first pass through the water removal heat exchanger 128 and can then travel downstream to the water removal cooling device 130. The water removal cooling device 130 may be a thermoelectric cooling device, a heat exchanger, or another type of device that can further cool the anodic exhaust gas 118. Cooling of the hot anodic exhaust gas 118 by the water removal cooling device 130 causes water present in the anodic exhaust gas 118 to condense. The water may condense and be collected in the condensate drum 132, which is in fluid communication with the water removal cooling device 130. The condensate pump 134, which is also in fluid communication with the condensate drum 132, can be used to direct a stream of the water condensate 136 from the condensate drum 132 back to the water removal heat exchanger 128. The transfer of heat from the anodic exhaust gas 118 to the water condensate 136 can produce a water-steam mixture 226 that may thereafter be added to the stream of pressurized natural gas 184 for subsequent addition to the stream of pressurized natural gas 184 discharged from the compressor 174 of the expander-compressor unit 170. In this example, the water-steam mixture 226 discharged from the water removal heat exchanger 128 is introduced to the water treatment unit 138 to remove impurities and the like before the water-steam mixture 226 is introduced into the stream of pressurized natural gas 184.

After water has been removed from the anodic exhaust gas 118 by the water removal unit 126, at least some of the carbon dioxide in the anodic exhaust gas 118 is captured by the carbon capture system 140 of the electrical energy generation system 100. In this regard, the anodic exhaust gas 118 is initially directed to the gas compression subsystem 142 of the carbon capture system 140 to increase the pressure of the anodic exhaust gas 118.

This example of the gas compression subsystem 142 includes a plurality of exhaust gas compressors 144, which are labeled herein as C1, C2, C3, C4, and C5 only for purpose of differentiation. In this example of the gas compression subsystem 142, the exhaust gas compressors 144 are arranged and configured to incrementally increase the pressure of the anodic exhaust gas 118 in multiple stages. Increasing the pressure of the exhaust gas incrementally via the multiple compression stages can allow the pressure of the anodic exhaust gas 118 to be increased to a desired level with a lesser resulting increase in the temperature of the anodic exhaust gas 118 than is possible if the pressure increase is accomplished in a single compression stage. Lower inlet temperatures afforded by multistage compression of the anodic exhaust gas 118 may also permit the use of a higher interstage compression ratio. Nonetheless, single stage compression as well as compression via a different number of multiple compression stages is possible in other examples. In some examples, the anodic exhaust gas 118 may be compressed in the gas compression subsystem 142 to a pressure of 60 bar or to another pressure required for downstream carbon dioxide separation.

In this example, the gas compression subsystem 142 includes a plurality of compression cooling devices 146 that are arranged and configured to cool the anodic exhaust gas 118 during compression thereof by the exhaust gas compressors 144. In this example, the gas compression subsystem 142 includes five compression cooling devices 146 that are labeled as E1, E2, E3, E4, and E5 only for purpose of differentiation. The arrangement of the cooling devices 146 in this example can operate to cool the anodic exhaust gas 118 between each compression stage performed by the exhaust gas compressors 144, and also after the final compression stage performed by the exhaust gas compressor labeled as C5. Other numbers of cooling devices and related cooling strategies may be employed in other examples.

Water present in the anodic exhaust gas 118 as the anodic exhaust gas 118 travels through the gas compression subsystem 142 may be collected in one or more compression stage condensate collection vessels, such as condensate drums 228. In this example of the gas compression subsystem 142, a dryer 230 is also interposed between the third and fourth compression stage to further dry the anodic exhaust gas 118 before further compression and subsequent discharge thereof from the gas compression subsystem 142. In some examples, the dryer 230 may be a molecular sieve type dryer. The dryer 230 may be usable to lower the moisture level of the anodic exhaust gas 118 to less than 1 ppm. At least when the dryer 230 is a molecular sieve dryer, the dryer 230 may be placed at higher pressure stage to optimize dryer performance.

After the multi-stage compression of the anodic exhaust gas 118 in the gas compression subsystem 142, a compressed gas stream 148 is discharged from the gas compression subsystem 142 for additional downstream processing. In this example, the compressed gas stream 148 is discharged from the gas compression subsystem 142 and, more particularly, from the last cooling device E5 of the plurality of cooling devices 146, where the compressed gas stream 148 is subjected to a final cooling step prior to discharge from the gas compression subsystem 142.

In some examples, the compressed gas stream 148 may exit the gas compression subsystem 142 at a pressure of approximately 30 bar rather than a lower pressure of, for example, 7 bar. At a pressure of 30 bar, the boiling point of carbon dioxide is -16 °C, whereas at a pressure of 7 bar, the boiling point of carbon dioxide is -49 °C. Compressing the carbon dioxide to a higher pressure such as 30 bar can help to ensure there is enough cooling energy available in the liquefied natural gas to fully liquefy the captured carbon dioxide without the need for an additional cooling system.

The compressed gas stream 148 may contain carbon dioxide, as well as other gases such as, but not limited to, hydrogen and small amounts of carbon monoxide. The carbon dioxide may be separated from other gases in the compressed gas stream 148 prior to being subjected to further carbon capture operations. In this example, the carbon dioxide may be separated from the other gases by passing the compressed gas stream 148 through the optional membrane separator 150.

The use of the membrane separator 150 can avoid disadvantages associated with use of, for example, an amine-based carbon capture system. For example, by using the membrane separator 150, there is no concern about potential fouling and corrosion associated with an amine-based system. Likewise, the typically high energy costs associated with operation of an amine-based system, as well as additional operating costs resulting from periodic replacement of degraded amine solution, are also eliminated. The membrane 150 may also be more stable than an amine-based system when the electrical energy generation system 100 is deployed in a transportation application, as a transportation application may be subjected to vibration and movements that might negatively impact the carbon dioxide absorption capacity of an amine-based system. Additionally, the overall startup time of the electrical energy generation system 100 may be better when using the membrane separator 150 for carbon dioxide separation, as the system startup time will depend only on the start-up time of the fuel cell 102 rather than a longer startup time typically required for the stabilization of an amine-based carbon capture system.

Compressed gaseous carbon dioxide 152 separated from the compressed gas stream 148 is thereafter directed to the liquefaction subsystem 154 of the carbon capture system 140. The gas(es) that has been separated from the carbon dioxide by the membrane separator 150 is shown to be directed to the first heat exchanger unit 116 as the recycled fuel feed 156 for supply to the anode 106 of the fuel cell 102.

While not specifically illustrated in the drawing figures, in examples where the optional separator 150 is omitted from the system 100, one or more other non-condensed gases (e.g., hydrogen) in the compressed gas stream 148 may be sent to the liquefaction subsystem 154 of the carbon capture system 140 along with the carbon dioxide. The one or more non-condensed gases will remain in a gaseous state and may be added to the liquefied natural gas fuel feed 110 supplied to the anode side of the fuel cell 102 as part of a gas (e.g., hydrogen, boil-off-gas) stream 190 discharged from an outlet(s) of the one or more storage tanks 188.

In other examples, a separation drum may be used in lieu of or in addition to the separator 150. When present, the separator drum may be located upstream of the one or more storage tanks 188, and may be used to remove hydrogen and other non-condensed gases (e.g., CO) from the compressed gas stream 148 discharged by the gas compression subsystem 142. In one example where such a separation drum is provided, liquefied carbon dioxide 186 can be directed to the one or more storage tanks 188, while the non-condensed gases in the compressed gas stream 148 can be added to the liquefied natural gas stream discharged from the fuel storage tank 112. In another example where such a separation drum is provided, liquefied carbon dioxide 186 can be directed to the one or more storage tanks 188, while the non-condensed gases in the compressed gas stream 148 can be mixed with a stream of reduced pressure of natural gas 176 discharged from an expander 172 and directed to a sub-cooling device 160. In another example where such a separation drum is provided, liquefied carbon dioxide 186 can be directed to the one or more storage tanks 188, while the non-condensed gases in the compressed gas stream 148 can be mixed with a stream of pressurized natural gas 184 discharged from a compressor 174 of an expander-compressor unit 170. In another example where such a separation drum is provided and the membrane 150 is also present, liquefied carbon dioxide 186 can be directed to the one or more storage tanks 188, while the non-condensed gases in the compressed gas stream 148 can be mixed with the recycled fuel feed 156 exiting the membrane 150.

In any case, the liquefaction subsystem 154 can be operated to liquefy the compressed gaseous carbon dioxide 152. To that end, the liquefaction subsystem 154 may include and/or may involve the cooperation of the liquefaction cooling device 158, the liquefaction subcooling device 160, the vaporizer 166, and the expander 172 of the expander-compressor unit 170. As shown in FIG. 2, liquefied carbon dioxide 186 can be discharged from the liquefaction subcooling device 160 of the liquefaction subsystem 154 and directed to the one or more storage tanks 188. Non-condensed hydrogen (and/or boil-off-gas) 190 present in the liquefied carbon dioxide 186 is shown to be introduced into recycled fuel feed 156 supplied by the membrane separator 150 to the anode side of the fuel cell 102.

In the liquefaction subsystem 154, the temperature of the gaseous carbon dioxide 152 can be reduced to or below a critical temperature necessary for liquefaction by utilizing the inherent low temperature of the liquified natural gas used as fuel for the fuel cell 102. More specifically, the pressurized stream of liquefied natural gas 164 that is directed to the vaporizer 166 can subsequently serve as a cooling media by the liquefaction subsystem 154. In some examples, the pressure of the pressurized stream of liquefied natural gas 164 may be about 30 bar.

The vaporizer 166 vaporizes the pressurized stream of liquified natural gas 164 and subsequently directs the stream of vaporized natural gas 168 to downstream components of the liquefaction subsystem 154. In this example, the pressurized stream of liquefied natural gas 164 is vaporized by transferring heat thereto from the stream of cooled gaseous carbon dioxide 178 that has been discharged by the membrane separator 150 and initially cooled by the liquefaction cooling device 158. The stream of cooled gaseous carbon dioxide 178 enters a heat exchanger component of the vaporizer 166, and exits as a stream of condensed carbon dioxide 179 from an outlet of the heat exchanger component. Because the heat exchanger component may have a tube-side heat transfer coefficient that is lower than a shell-side heat transfer coefficient, and to limit a tube metal temperature of the heat exchanger component, the heat exchanger component may be arranged such that liquefied natural gas vaporization occurs at the tube side and carbon dioxide condensation occurs at the shell side.

The stream of condensed carbon dioxide 179 can thereafter be subcooled. Subcooling of the condensed carbon dioxide 179 may, for example, avoid further vaporization due to flashing inside the one or more storage tanks 188. Subcooling of the stream of condensed carbon dioxide 179 is accomplished in this example by directing the stream of vaporized natural gas 168 from the vaporizer 166 to an inlet of the expander 172 of the expander-compressor unit 170. The expander 172 may be, for example, an expansion valve, a turboexpander, or another device by which the pressure and the temperature of the stream of vaporized natural gas 168 can be reduced. In any case, a reduced pressure stream of natural gas 176 is discharged from the expander 172 and directed to the liquefaction subcooling device 160 of the liquefaction subsystem 154 to act as a carbon dioxide subcooling media. Particularly, the condensed carbon dioxide 179 received at the liquefaction subcooling device 160 is subcooled by the reduced pressure stream of natural gas 176 received from the expander, which is also directed from the liquefaction subcooling device 160 to the liquefaction cooling device 158 for cooling of the gaseous carbon dioxide 152 discharged by the membrane separator.

The reduced pressure stream of natural gas 176 absorbs heat when passing through each of the liquefaction subcooling device 160 and the liquefaction cooling device 158. A warmed stream of natural gas 180 is resultantly discharged by the liquefaction cooling device 158. In this example, the warmed stream of natural gas 180 is directed to one of the compression cooling devices 146 (E3 in this case) of the gas compression subsystem 142 to help dry the anodic exhaust gas 118 during compression thereof. In this example, the warmed stream of natural gas 180 is directed to the third stage (E3) compression cooling device 146 because it is located immediately upstream of the dryer 230. Thus, circulating the warmed stream of natural gas 180 through the third stage (E3) compression cooling device 146 can help to reduce the required drying capacity of the dryer 230.

After being used to assist with drying of the anodic exhaust gas 118 during compression thereof in the gas compression subsystem 142 of the carbon capture system 140, a discharge stream of natural gas 182 is directed from the third stage (E3) compression cooling device 146 of the gas compression subsystem 142 to an inlet of the compressor 174 of the expander-compressor unit 170. The compressor 174 is driven by power provided by the coupled expander 172. The compressor 174 increases the pressure of the natural gas 182 received from the compression cooling device 146 to a sufficient level to feed into the anode 106, and discharges the feed stream of pressurized natural gas 184 to the first heat exchanger unit 116 for preheating prior to introduction into the anode side 106 of the fuel cell 102. Use of the coupled expander-compressor unit 170 in this manner helps to achieve a balanced system in terms of the pressure and the temperature required for the anode fuel feed and for carbon dioxide liquefaction.

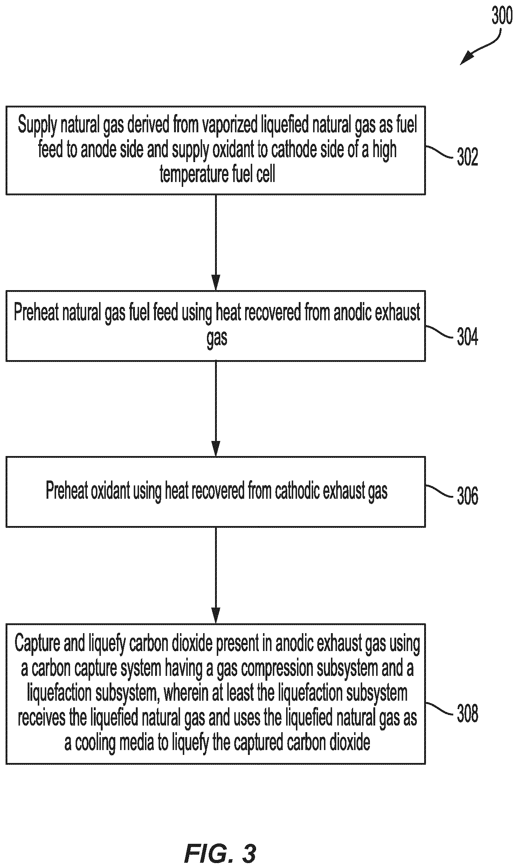

FIG. 3 is a flowchart 300 describing one example of a method of operating an electrical energy generation system that includes carbon dioxide capture and liquefaction functionality. As indicated in block 302, at a fuel cell having an anode and a cathode separated by and in contact with an electrolyte, a natural gas fuel feed is supplied to the anode and an oxidant is supplied to the cathode to cause electrochemical reactions within the fuel cell by which chemical energy in the fuel is converted into electrical energy In some examples, the high temperature fuel cell may be a solid oxide fuel cell having a solid electrolyte layer. In one example, the oxidant supplied to the cathode may be air.

As indicated in block 304, the natural gas fuel feed can subsequently be preheated using heat recovered from an anodic exhaust gas produced by the electrochemical reactions within the fuel cell. In some examples, the heat used to preheat the fuel feed may be recovered from the anodic exhaust gas using an anodic heat recovery subsystem that includes at least one anode side heat recovery exchanger located within a vertical chamber defined by an enclosure of a first heat exchanger unit. The first heat exchanger unit may have an inlet in fluid communication with an anode side outlet of the fuel cell.

As indicated in block 306, the oxidant can subsequently be preheated using heat recovered from a cathodic exhaust gas produced by the electrochemical reactions within the fuel cell. In some examples, the heat used to preheat the oxidant may be recovered from the cathodic exhaust gas using a cathodic heat recovery subsystem that includes at least one cathode side heat recovery exchanger located within a vertical chamber defined by an enclosure of a second heat exchanger unit. The second heat exchanger unit may have an inlet in fluid communication with a cathode side outlet of the fuel cell.

As indicated in block 308, carbon dioxide present in the anodic exhaust gas can be captured and liquefied using a carbon capture system having a gas compression subsystem and a liquefaction subsystem. In some examples, the gas compression subsystem may include a plurality of exhaust gas compressors and a plurality of cooling devices. In some examples, the exhaust gas compressors may be arranged to compress the anodic exhaust gas in stages, and the plurality of cooling devices may be used to cool the anodic exhaust gas during compression. In some examples, the liquefaction subsystem may include liquefaction cooling device, a liquefaction subcooling device, a liquefied natural gas vaporizer, and an expander-compressor unit. Vaporized natural gas can be discharged by the vaporizer and may be expanded by an expander of the expander-compressor unit into a reduced pressure stream of natural gas. The reduced pressure stream of natural gas can be used as a cooling media by the liquefaction cooling device and the liquefaction subcooling device to liquefy compressed gaseous carbon dioxide. The reduced pressure stream of natural gas may subsequently be received and compressed by a compressor of the expander-compressor unit into a feed stream of pressurized natural gas that is introduced to the anode side of the fuel cell subsequent to being preheated in the first heat exchanger unit. A membrane separator may be interposed between the gas compression subsystem and a liquefaction subsystem to separate carbon dioxide from other gases and remaining water in a gas stream discharged from the gas compression subsystem to the liquefaction subsystem.

System examples according to the present disclosure can also operate with minimal pressure drop, which is beneficial given that most current developments in the area of high temperature fuel cells have been at lower pressures. Electrical energy generation systems integrating carbon capture cooling via a liquefied natural gas fuel feed with a SOFC or equivalent high temperature fuel cell and exhaust gas heat recovery are nonetheless also readily adaptable to high-pressure applications through which advantages in overall system performance and higher electrical energy output may be obtained.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. An electrical energy generation system comprising:
a fuel cell including an anode and a cathode separated by and in contact with an electrolyte;
an anodic heat recovery subsystem usable to preheat a fuel suppliable to the anode using heat recovered from an anodic exhaust gas produced by electrochemical reactions within the fuel cell;
a carbon capture system for capturing and liquefying carbon dioxide present in the anodic exhaust gas, the carbon capture system including a gas compression subsystem and a liquefaction subsystem; and
wherein the liquefaction subsystem is interposed between a liquefied natural gas supply and the fuel cell to receive a stream of the liquefied natural gas and to utilize the liquefied natural gas as a cooling media to liquefy carbon dioxide captured from the anodic exhaust gas.

2. The electrical energy generation system of claim 1, wherein the fuel cell is a solid oxide fuel cell or a protonic ceramic fuel cell.

3. The electrical energy generation system of claim 1, wherein:
the anodic heat recovery subsystem includes a plurality of heat recovery exchangers arranged one above the other within a vertical chamber defined by an enclosure of a first heat exchanger unit having an inlet in fluid communication with an anode side outlet of the fuel cell;
the plurality of heat recovery exchangers are arranged for passage therethrough of a stream of the anodic exhaust gas; and
heat from the anodic exhaust gas is transferable to the feed of natural gas by the plurality of heat recovery exchangers;
optionally, wherein:
a downstream water separation unit is interposed between the first heat exchanger unit and the gas compression subsystem of the carbon capture system;
the water separation unit includes a heat exchanger and a cooling device arranged in an anodic exhaust gas flow path; and
wherein the water separation unit is usable to separate water from one or more gases in the anodic exhaust gas by condensing the water, and to direct a reduced water content anodic exhaust gas to the gas compression subsystem; and/or wherein the plurality of heat recovery exchangers of the first heat exchanger unit are plate and frame type heat exchangers that are stacked within the enclosure.

4. The electrical energy generation system of claim 3, wherein:
a downstream water separation unit is interposed between the first heat exchanger unit and the gas compression subsystem of the carbon capture system;
the water separation unit includes a heat exchanger and a cooling device arranged in an anodic exhaust gas flow path; and
wherein the water separation unit is usable to separate water from one or more gases in the anodic exhaust gas by condensing the water, and to direct a reduced water content anodic exhaust gas to the gas compression subsystem.

5. The electrical energy generation system of claim 1, further comprising a cathodic heat recovery subsystem usable to preheat an oxidant suppliable to the cathode using heat recovered from a cathodic exhaust gas produced by electrochemical reactions within the fuel cell, wherein:
the cathodic heat recovery subsystem includes a plurality of heat recovery exchangers arranged one above the other within a vertical chamber defined by an enclosure of a second heat exchanger unit having an inlet in fluid communication with a cathode side outlet of the fuel cell;
the plurality of heat recovery exchangers are arranged for passage therethrough of a stream of the cathodic exhaust gas; and
heat from the cathodic exhaust gas is transferable to the oxidant by the plurality of heat recovery exchangers.

6. The electrical energy generation system of claim 1, further comprising a membrane separator interposed between the gas compression subsystem and the liquefaction subsystem of the carbon capture system to separate carbon dioxide from one or more other gases present in a compressed gas stream discharged by the gas compression subsystem.

7. The electrical energy generation system of claim 1, wherein:
the liquefaction subsystem is arranged to receive a stream of compressed gas from the gas compression subsystem and includes a liquefaction cooling device, a liquefaction subcooling device, a liquefied natural gas vaporizer, and an expander-compressor unit;
natural gas resulting from vaporization of the stream of the liquefied natural gas is expandable by an expander of the expander-compressor unit into a reduced pressure stream of natural gas that is usable as a cooling media by the liquefaction cooling device and the liquefaction subcooling device to liquefy compressed gaseous carbon dioxide; and
the reduced pressure stream of natural gas is subsequently receivable and compressible by a compressor of the expander-compressor unit into a feed stream of pressurized natural gas for introduction to an anode side of the fuel cell.

8. A carbon capture system for decarbonizing an anodic exhaust gas produced by an anode side of an electrical energy generation system fuel cell, comprising:
a gas compression subsystem arranged to receive the anodic exhaust gas from the anode side of the fuel cell, the compression subsystem including at least one exhaust gas compressor to compress the anodic exhaust gas, and at least one compression cooling device to cool the anodic exhaust gas during compression thereof by the at least one exhaust gas compressor;
a liquefaction subsystem arranged to receive a stream of compressed gaseous carbon dioxide from the gas compression subsystem and a stream of liquefied natural gas from a supply of liquefied natural gas; and
wherein the gaseous carbon dioxide is condensable into liquefied carbon dioxide by the liquefaction subsystem by transferring heat from the compressed gaseous carbon dioxide to the liquefied natural gas.

9. The carbon capture system of claim 8, further comprising a water-gas shift reactor interposed between the fuel cell and the gas compression subsystem in a flow path of the anodic exhaust gas to convert carbon monoxide in the anodic exhaust gas to carbon dioxide;
optionally, further comprising a water removal unit interposed between the water-gas shift reactor and the gas compression subsystem in a flow path of the anodic exhaust gas, the water removal unit comprising:
a water removal heat exchanger arranged to receive the anodic exhaust gas from the water-gas shift reactor and to direct the anodic exhaust gas to a water removal cooling device to condense the water by cooling of the anodic exhaust gas;
a condensate collection vessel downstream of the water removal cooling device to collect and store water condensate; and
a pump in fluid communication with the condensate collection vessel to direct the water condensate, via the water removal heat exchanger, to a fuel feed that is suppliable to the anode side of the fuel cell.

10. The carbon capture system of claim 8, wherein:
the liquefaction subsystem includes a liquefaction cooling device, a liquefaction subcooling device, a liquefied natural gas vaporizer, and an expander-compressor unit;
natural gas resulting from vaporization of the stream of the liquefied natural gas is expandable by an expander of the expander-compressor unit into a reduced pressure stream of natural gas that is usable as a cooling media by the liquefaction subsystem to liquefy compressed gaseous carbon dioxide; and
the reduced pressure stream of natural gas is subsequently receivable and compressible by a compressor of the expander-compressor unit into a feed stream of pressurized natural gas for introduction to the anode side of the fuel cell.

11. The carbon capture system of claim 8, wherein:
a membrane separator is interposed between the gas compression subsystem and the liquefaction subsystem; and
compressed gaseous carbon dioxide is separable by the separator from at least some amount of other gases in a stream of compressed gas discharged from the gas compression subsystem, and the compressed gaseous carbon dioxide is thereafter directable to the liquefaction subsystem;
optionally, further comprising a recycled fuel feed flow path between the membrane separator and the fuel cell by which the at least some amount of other gases is directable to the anode side of the fuel cell.

12. A method of operating an electrical energy generation system comprising:
at a fuel cell having an anode and a cathode separated by and in contact with an electrolyte, supplying a natural gas fuel feed to the anode and an oxidant to the cathode to cause electrochemical reactions within the fuel cell by which chemical energy in the fuel is converted into electrical energy;
subsequently preheating the natural gas fuel feed using heat recovered from an anodic exhaust gas produced by the electrochemical reactions within the fuel cell;
capturing and liquefying carbon dioxide present in the anodic exhaust gas using a carbon capture system having a gas compression subsystem and a liquefaction subsystem;
wherein the gas compression subsystem compresses carbon dioxide present in an anodic exhaust gas produced by the fuel cell and discharges a stream of compressed gaseous carbon dioxide; and
wherein the liquefaction subsystem receives a stream of liquefied natural gas from a supply of liquefied natural gas and liquefies the compressed gaseous carbon dioxide by transferring heat from the gaseous carbon dioxide to the liquefied natural gas;
optionally, wherein the compressed gaseous carbon dioxide is at a pressure of approximately 30 bar where a boiling point of the compressed carbon dioxide is approximately -16 °C, and all cooling energy required to liquefy the compressed gaseous carbon dioxide is provided by the stream of liquefied natural gas.

13. The method of claim 12, wherein the heat used to preheat the natural gas fuel feed is recovered from the anodic exhaust gas by passing the anodic exhaust gas through at least one heat recovery exchanger arranged within a vertical chamber defined by an enclosure of a first heat exchanger unit having an inlet in fluid communication with an anode side outlet of the fuel cell; and/orwherein:
water is removed from the anodic exhaust gas at a location upstream of the gas compression subsystem by passing the anodic exhaust gas through a water removal heat exchanger and a water removal cooling device of a water removal unit to condense the water by cooling of the anodic exhaust gas;
water condensate is collected and stored in a condensate collection vessel of the water removal unit that is located downstream of the water removal cooling device;
a water-steam mixture is generated by directing the water condensate from the condensate collection vessel to the water removal heat exchanger and transferring heat from the anodic exhaust gas to the water condensate; and
the water-steam mixture is directed from the water removal heat exchanger to the natural gas fuel feed to the anode of the fuel cell.

14. The method of claim 12, wherein:
a membrane separator is used to separate the compressed gaseous carbon dioxide from other gases discharged with the compressed gaseous carbon dioxide from the gas compression subsystem; and
at least some of the other gases are introduced into the natural gas fuel feed.

15. The method of claim 12, wherein:
the liquefaction subsystem includes a liquefaction cooling device, a liquefaction subcooling device, a liquefied natural gas vaporizer, and an expander-compressor unit;
liquefied natural gas is vaporized by the vaporizer into natural gas and the natural gas is thereafter discharged to and expanded by an expander of the expander-compressor unit into a reduced pressure stream of natural gas that is used as a cooling media by the liquefaction subsystem to liquefy compressed gaseous carbon dioxide; and
the reduced pressure stream of natural gas is subsequently received and compressed by a compressor of the expander-compressor unit into a feed stream of pressurized natural gas that is introduced to an anode side of the fuel cell;
optionally, wherein the stream of liquefied natural gas is vaporized by the vaporizer by transferring heat to the stream of liquefied natural gas from the stream of gaseous carbon dioxide, which is discharged from the liquefaction cooling device and received at the vaporizer.
